# EUROPEAN PATENT APPLICATION

(11) **EP 3 300 259 A1**
(43) Date of publication of application: **28.03.2018**
(21) Application number: 16189905.9
(22) Date of filing: 21.09.2016
(51) Int. Cl.: H04B 1/525, H04B 17/14

(54) **METHOD FOR CALCULATING A LEAKAGE BETWEEN A TRANSMIT PATH AND A RECEIVE PATH AND WIRELESS COMMUNICATION CIRCUIT**

(71) Applicant: Intel IP Corporation, Santa Clara, CA 95054 (US)
(72) Inventor: Avraham, Oren, 4632539 Herzlia (IL); Sulimarski, Avi, 73134 Kfar Oranim (IL)
(74) Representative: 2SPL Patentanwälte PartG mbB

(57) **Abstract**

A method for calculating a leakage between a transmit path and a receive path, includes transmitting a calibration signal via the transmit path. The method further includes receiving a second calibration signal via the receive path and opening a loopback path between the transmit path and the receive path while transmitting the first calibration signal. Further, the method includes calculating a leakage model for a leakage between the transmit path and the receive path using the calibration signal and the second calibration signal as well as compensating the leakage between the transmit path and the receive path using the leakage model during a loopback calibration of the transceiver.

## Description

### Field

Examples relate to a method for considering a leakage between a transmit path and a receive path as well as to a wireless communication circuit comprising a transmit path, a receive path and a leakage estimation circuit to calculate a leakage model for a leakage between the transmit path and the receive path.

### Background

Increasing communication data rates impose strict quality requirements for the transmitters and receivers used. In order to maintain the strict quality requirements, challenging specifications are established for the hardware components used for transmission and reception of signals in, for example, radio frequency implementations. Making the specifications more and more demanding may decrease production yield and, for example, increase costs for the development of transmission and reception circuitry in order to result with transmit paths and receive paths that are capable of fulfilling the quality requirements of to date and future wireless communication circuits and standards.

### Brief description of the Figures

Some embodiments of apparatuses and/or methods will be described in the following by way of example only, and with reference to the accompanying figures, in which
Fig. 1 shows an example of a wireless communication circuit;
Fig. 2 shows a further example of a wireless communication circuit comprising a transmit path and a receive path within a transceiver;
Fig. 3 illustrates an example of a wireless communication circuit with co-running transmit and receive paths;
Fig. 4 illustrates an example of a wireless communication circuit running in full duplex or in time division duplex;
Fig. 5 shows a flowchart of an example of a method for calculating a leakage between a transmit path and a receive path;
Fig. 6 schematically illustrates an example of a mobile telecommunications device;
Fig. 7 illustrates the deterioration of an amplitude characteristic of a loopback signal due to leakage between a transmit path and a receive path; and
Fig. 8 illustrates the deterioration of a phase characteristic of a loopback signal due to the leakage between the transmit path and the receive path.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements.

The terminology used herein is for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong, unless expressly defined otherwise herein.

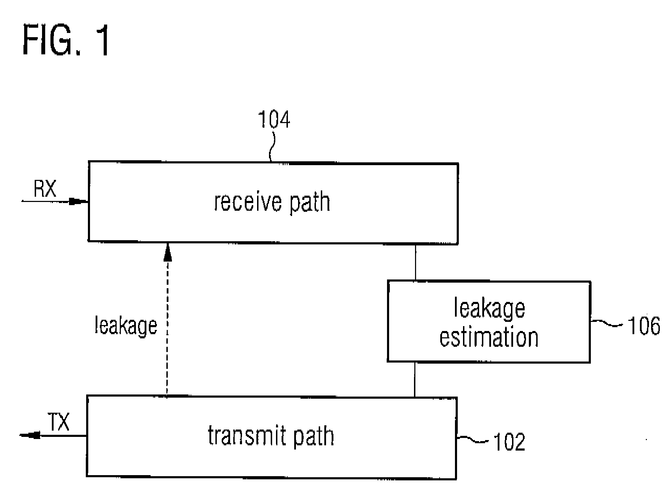

Fig. 1 illustrates an example of a wireless communication circuit having a transmit path 102 and a receive path 104. The transmit path 102 comprises components or circuitry required to generate a wireless communication signal that can, for example, be provided to an antenna radiator so as to be radiated into the environment. Some examples of transmit paths 102, therefore, may comprise a power amplifier (PA) in front of or upstream the antenna radiator to amplify a radio frequency signal generated within the transmit path. Likewise, the receive path 104 contains circuitry or elements required to process signals as received from an antenna's radiator in order to determine information received by, for example, a received radio frequency signal. In some examples, the receive path serves to receive data signals during a normal operation mode of the wireless communication circuit, while the same receive path may serve for calibration purposes in a calibration mode. In other examples, the receive path may be a dedicated receive path which is used for monitoring/calibration only while a further receive path is used to receive data in the normal operation mode.

In a wireless communication system, a transmit path may optionally further include a modulation circuit in order to convert the information to be submitted to a baseband signal according to the presently used modulation scheme. Further, as subsequent mixing circuitry to up-convert the baseband signal to the radio frequency signal used to radiate the information may be present. Likewise, receive paths 104 may include a down converter and a subsequent demodulation circuit in order to recover the logical information transported by means of the radio frequency communication signal. However, the term transmit path 102 and receive path 104 as used herein shall not be construed to include all the components technically necessary in order to generate a radio frequency signal or to recover the logical information transmitted by means of the radio frequency signal. To the contrary, a transmit path 102 or a receive path 104 as used in the context of the present description may comprise only a subset of those components or elements.

Depending on the implementation details, signal components of a transmit signal transmitted via the transmit path 102 may propagate to or influence the receive path 104. If, for example, the transmit path 102 and the receive path 104, in particular the electrical components constituting the transmit path and the receive path, are physically close to one another, a signal transmitted by or processed within the transmit path 102 may, for example, capacitively or inductively couple into the receive path 104 or one or more of its electrical components. The contribution of a signal within the receive path 104 which is caused by undesired coupling between the transmit path 102 and the receive paths 104 is called leakage. Leakage, therefore, adds signal components to the signal within the receive path 104 which do not originate from the signal received by, for example antenna radiators and, consequently, deteriorates the quality of the signal processed within or reconstructed by the receive path 104.

According to the examples described herein, a leakage estimation circuit 106 is configured to calculate a leakage model for the leakage between the transmit path 102 and the receive path 104 using a first calibration signal which is transmitted via the transmit 102 path as well as a second calibration signal which is received via the receive path 104 simultaneously. The leakage estimation circuit 106 knows about both the first calibration signal transmitted via the transmit path 102 for leakage calibration purposes and the associated second calibration signal, which is simultaneously received by the receive path 104. Therefore, the leakage estimation circuit 106 is capable of calculating the leakage model which models the signal modification between the transmit path 102 and the receive path 104 that transforms the transmitted first calibration signal to the received second calibration signal monitored within the receive path 104.

Once the leakage model for the leakage between the transmit path 102 and the receive path 104 has been determined, it may be used in various applications to increase the performance of the signal processing within the transmit path 102 and/or within the receive path 104.

In some examples, the leakage model may be used to compensate a leakage component within a receive signal presently received via the receive path 104, the leakage component being caused by leakage of a presently transmitted transmit signal into the receive path 104. To this end, the presently transmitted transmit signal may be used as an input to the leakage model so as to determine the leakage component caused by the transmit signal within the receive path 104. The leakage component can then be compensated within the receive path 104, e.g. by subtracting the leakage component from a signal within the receive path 104. According to some examples, transmit path 102 and a receive path 104 are implemented within a single transceiver, i.e. both belong to a transceiver circuit operating according to one single transmission standard, such as for example according to one of the 3^{rd} Generation Partnership Program (3GPP)-standards, one of the IEEE 802.11 Wireless Lan (WLAN) standards or according to one of the Bluetooth (BT) standards or its derivatives enabling to simultaneously transmit and receive signals. According to some examples, the transmit path and the receive path belong to a single transceiver.

Further examples, however, may use the leakage model in a setup where the transmit path 102 and the receive path 104 operate according to different transmission standards, such as for example a WLAN module running in parallel to a Bluetooth module (constituting a co-running setup). In this event, undesired signal components in the receive path 104 may be compensated which are caused by a co-running transmitter or transmit path that transmits signals according to a different standard as the receive path. Leakage of co- running transmitters, e.g. on the same chip, die or board, can so be considered in order to increase the signal quality of the signal generated by means of the receive path 104.

While in some examples, the signal received during normal operation may be enhanced when using a method for calculating or considering a leakage between a transmit path and a receive path, other examples may use the leakage model to increase the quality of calibrations performed within a transceiver, such as for example the determination of a pre-distortion model used to consider the non-linearity of a power amplifier within a transmit path. Power amplifiers ideally amplify a radio frequency signal as generated within the transmit path perfectly linearly and with perfect phase preservation. However, real power amplifiers tend to become non-linear by high output powers, where the power amplifiers operate in compression so that the actually provided output amplitude is lower than the desired amplitude (AM/AM distortion). Further, with increasing output power, power amplifiers tend to additionally apply an undesired phase shift, i.e. they exhibit AM/PM distortion. In order to alleviate the deteriorations due to those effects, pre-distortion is often applied to the signal before the power amplifier, intended to modify the signal in anticipation of the power amplifiers imperfections such that, as a net effect, good linearity and phase preservation within the transmit path is achieved.

To determine a pre-distortion model, some examples of wireless communication circuits optionally comprise a loopback path between the transmit path 102 and the receive path 104 in order to directly feed the signal generated within the transmit path 102 to the receive path 104 so as to be able to estimate the signal deterioration due to - at least - the power amplifier. Further pre-distortion models may likewise compensate for other distortions within the transmit path.

Some examples optionally further comprise a switch within the loopback path so as to be able to close the loopback path between the transmit path 102 and the receive path 104 while a third calibration signal for determining the pre-distortion model is generated within the transmit path 102 and forwarded to the receive path 104. According to some examples, the loopback path may further comprise an attenuation element to attenuate the third calibration signal generated within the transmit path 102 before it is processed within the receive path as a fourth calibration signal in order to avoid saturation of the amplifiers and associated circuitry within the receive path 104. In order to determine the leakage, the loopback path between the transmit path 102 and the receive path 104 may be opened while the first calibration signal is transmitted, e.g. using the switch, since only the leakage shall be determined and no direct coupling is desirable.

Further examples may also optionally include an adjustable attenuation element in the loopback path, which is adjusted to a possible maximum attenuation while the third calibration signal is transmitted in order to achieve maximum mutual isolation between the transmit path 102 and the receive path 104.

In order to decrease a deterioration due to leakage for the determination of a pre-distortion model for the transmit path, the leakage estimation may be performed while the loopback path between the transmit path 102 and the receive path 104 is open. After having determined the leakage model, the loopback calibration may be performed, which comprises closing the loopback path and transmitting the third calibration signal via the transmit path 102, which is coupled into the receive path 104 by means of the loopback path. Similar to the determination of the leakage model, a pre-distortion model for the transmit path's components, e.g. for a power amplifier with the transmit path 102, can be calculated using the received fourth calibration signal as well as the leakage model. For example, the received fourth calibration signal can be corrected for leakage effects when the leakage model is applied to the third calibration signal and the so determined leakage component of the third calibration signal is corrected for in the received fourth calibration signal.

According to some examples, the leakage model comprises at least one of a contribution for a non-linearity of an amplifier within the transmit path 102, a memory effect and a channel between the transmit path and the receive path. Depending on the dominant effect, model parameters considering one or more of the previously-cited contributions may be used, allowing for a precise modeling of the coupling between the transmit path 102 and the receive path 104. In an implementation where the leakage model is intended to increase the accuracy of a loopback calibration for determining a pre-distortion model for a power amplifier within the transmit path 102, the leakage model of some examples comprises the same contributions for the power amplifier as the model used for loopback calibration. When the estimation of the leakage model is based on the same assumptions and uses the same contributions as the determination of the pre-distortion model, overall accuracy of the determination of the pre-distortion model may be increased as compared to an approach using different models for the estimation of the leakage model and for the determination of the pre-distortion model.

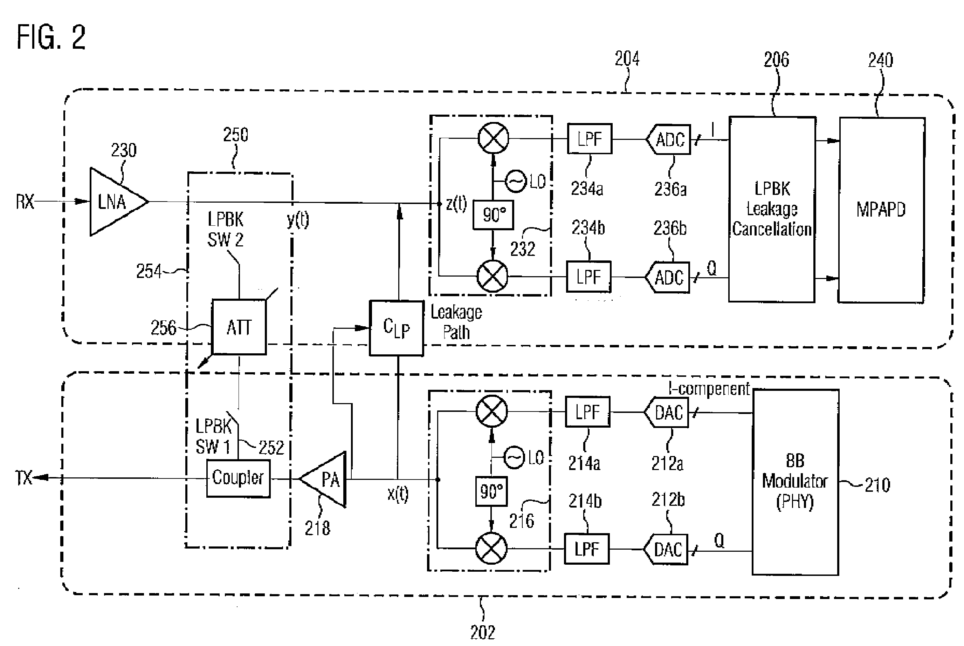

Fig. 2 illustrates an example of a wireless communication circuit having a transmit path 202 and a receive path 204. For the purpose of the illustration, some components of the transmit path 202 and of the receive path 204 are illustrated. The exemplary transmit and receive paths use I/Q modulation. The transmit path 202 serves to create a radio frequency signal from a baseband signal, the baseband signal comprising the information to be transmitted via the radio frequency signal. A baseband modulator 210 within the transmit path 202 creates both an I-component and a Q-component of the baseband signal. A first digital-to-analog converter 212a and a second digital-to-analog converter 212b serve to create analog representations of the I-component and Q-component, each digital-to-analog converter followed by low path filters 214a and 214b to clear the spectrum, for example deleting alias components. A mixer circuit 216 is used to up-convert the I-component and the Q-component and to sum up both up-converted components to provide the radio frequency signal. The so-generated radio frequency signal is amplified by means of a power amplifier 218. An output of the power amplifier 218 is connectable to a radiator of an antenna system in order to radiate the amplified radio frequency signal into the environment. According to some examples, the connection between the power amplifier 218 and the radiator can optionally be opened and closed, for example by means of a switch.

The receive path 204 comprises a low-noise amplifier 230 which is connectable to a receive antenna radiator. The received radio frequency signal is down-converted by means of a further mixing circuit 232 which is also separating the I-component and the Q-component of the down-converted baseband signal from one another. Low path filters 234a and 234b serve to clean the spectrum before the analog representation of the I-component and the Q-component is digitized by means of analog-to-digital converters 236a and 236b. In the example illustrated in Fig. 2, the leakage estimation circuit 206 serves to perform both calculating the leakage model between the transmit path 202 and the receive path 204 and using the leakage model to compensate leakage between the transmit path 202 and the receive path 204 during a loopback calibration of the transceiver of Fig. 2. The pre-distortion estimation circuit 240 (MPAPD) serves to calculate the pre-distortion model for the power amplifier 218. The predistortion model is calculated while the loopback path 250 between the transmit path 202 and the receive path 204 is closed so that a third calibration signal generated within the transmit path 202 and amplified by means of power amplifier 218 is coupled (looped back) into the receive path 204.

In the particular example of Fig. 2, the loopback path 250 comprises a first switch 252, a second switch 254 and a variable attenuation element 256 between the first switch 252 and the second switch 254. By closing the switches 252 and 254, the loopback path between the transmit path 202 and the receive path 204 can be closed in order to enable loopback calibration. During loopback calibration, the transmitter transmits a further calibration signal via the transmit path 202 into the receive path 204. The receive path 204 receives the further received calibration signal and the pre-distortion estimation circuit 240 calculates a pre-distortion model for the power amplifier 218 using the further calibration signal and the corresponding further received calibration signal.

The loopback path 250 is coupled to the transmit path 202 downstream power amplifier 218. In examples where the direct leakage between the transmit path 202 and the receive path 204 shall be estimated, i.e. where an additional coupling due to the radiators of antennas shall not be considered, the power amplifier 218 and the low-noise amplifier 230 may be disconnected from their antennas by switches or the like. With the given setup, the contribution of leakage between the transmit path 202 and the receive path 204 can be considered during the loopback calibration. Not considering the direct leakage between the transmit path 202 and the receive path 204 would decrease the accuracy of the loopback calibration and, consequently, lead to a pre-distortion model not providing the best possible results. Using a method to consider leakage during the loopback calibration may result with transmission circuits having better characteristics and, for example, being capable of fulfilling highly demanding spectral mask and Error Vector Magnitude (EVM) requirements or further quality requirements for a transmitter or a transmit path of a wireless communication system.

For example, if the leakage model comprises the same contributions for the power amplifier 210 within the transmit path 202 as the model used for the loopback calibration, good predistortion models may be determined.

Fig. 2 schematically illustrates a possible leakage path (C_{LP}) and its possible contributions. One contribution to the leakage could be coupling between the transmit path 202 and the receive path 204 upstream the power amplifier 218 while other contributions to the leakage may originate from parts of the circuitry downstream the power amplifier 218. Also for this reason, it may be beneficial to also use the model for the determination of the power amplifier's non-linearities within the model for the estimation of the leakage in order to appropriately consider all contributions. One particular example as to how this can be achieved is given in the subsequent paragraphs. Of course, this is only one particular example for the determination of a leakage model and further examples may well use other implementations and models.

For the following description of the leakage model, assume that x(t) is the signal at the input to the power amplifier 218, while y(t) is the desired signal to be used for the determination of the pre-distortion model, i.e. the desired post-power amplifier loopback signal exhibiting the non-linearities and memory effects of the power amplifier 218. Due to leakage, however, z(t) is the actually processed loopback signal present at an input to the mixing stage 232, which deviates from y(t). That is, z(t) comprises the desired post-power amplifier loopback signal y(t) as well as the undesired leakage-induced signal, i.e. the leakage component. Assuming that C_{LP(.)} denotes the leakage model, those signals interrelate according to the following equation (Equation 1): $z \left(t\right) = y \left(t\right) + {C}_{LP} \left(x\left(t\right)\right) + w \left(t\right) ,$ in which w(t) is a thermal noise component.

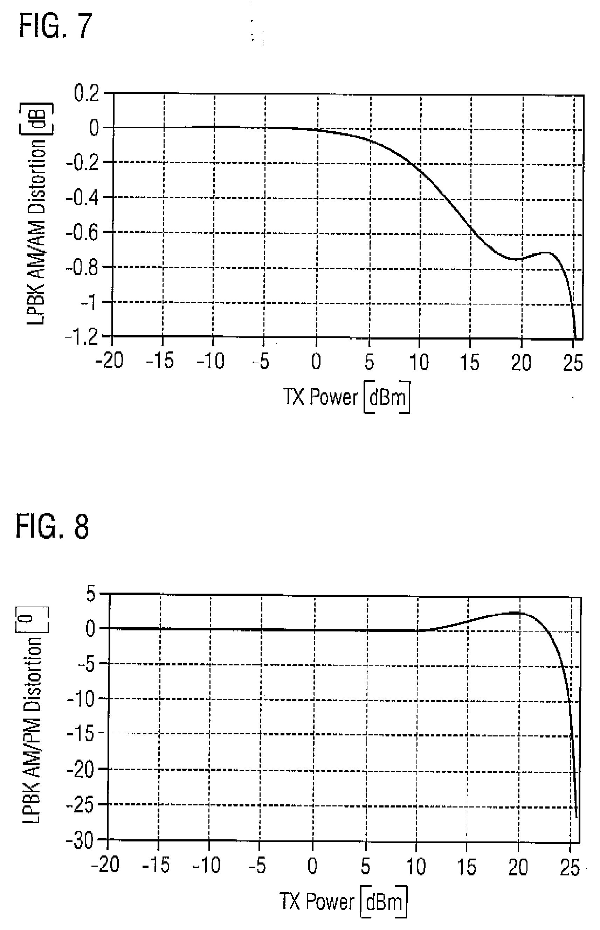

Real circuits may have considerable leakage, resulting in a loopback AM/AM and AM/PM distortion, and in considerable deviations of z(t) from the desired post-power amplifier loopback signal y(t). The loopback signal may exhibit different non-linearity than the transmit signal one would like to measure. Figs. 7 and 8 illustrate negative impact of leakage for a particular implementation. Both figures illustrate, on the x-axis, the power of the further calibration signal used for the generation of the pre-distortion model, and, on the y-axis, the deviation of the nominal value y(t) due to leakage. While Fig. 7 shows the deviation of the amplitude, Fig. 8 shows the deviation of the phase. Both Figures illustrate that, in particular for high transmit powers, the deviation from the nominal can be significant which, consequently, would result in a deteriorated pre-distortion model since it would be determined using signals exhibiting the AM/AM and the AM/PM distortions caused by leakage and illustrated in Figs. 7 and 8.

In order to estimate the leakage within the wireless communication circuit of Fig. 2, switches 252 and 254 are opened and the variable attenuation 256 is set to maximum possible attenuation. Under these circumstances, Equation 1 can be approximated by ${z}_{L} \left(t\right) ≅ {C}_{LP} \left(x\left(t\right)\right) + w \left(t\right) ,$ and the signal at the input of the receive path would mainly be due to the undesired leakage (_{L} indicates leakage). In the described particular example, an expansion of the pre-distortion model used by a Memory Power Amplifier Pre- Distortion algorithm (MPAPD) within the pre-distortion estimation circuit 240 is applied as the leakage model, using three summation terms instead of two terms of the pre-distortion model. The pre-distortion model used in the pre-distortion estimation circuit 240 is: $\hat{z} \left(n\right) = F \left[y\left(n\right)\right] = {\sum }_{q = 0}^{Q - 1} {\sum }_{k = 1}^{K} {a}_{kq} y \left(n-q\right) {\left|y\left(n-q\right)\right|}^{k - 1} .$

In this pre-distortion model, the coefficient k considers the non-linearities of the power amplifier 218, while the coefficient q considers memory effects within the power amplifier 218. In order to additionally model the channel between the transmit path and the receive path, the leakage model is expanded by a third summation term to read: ${C}_{LP} \left[x\left(n\right)\right] = {\sum }_{p = 0}^{P} {\sum }_{k = 1}^{K} {\sum }_{q = 0}^{Q} {a}_{pkq} {\left|x\left(n-q-p\right)\right|}^{k - 1} x \left(n-q-p\right) .$

The same assumptions are used for the determination of the pre-distortion model and for the determination of the leakage model. In particular, the leakage model covers the non-linearity of the transmit path's power amplifier (AM/AM, AM/PM) as well as the channel between the transmit path and the receive path (delay, gain, frequency, amplitude and phase response).

Alternatively, the leakage model can be described in a matrix representation as follows: $\overline{{z}_{L}} = \overline{\overline{X}} ⋅ \overline{A} + \overline{W} ,$ where z̅_̅{̅L̅}̅ is a vector containing the series of samples of zL[n], $\overline{\overline{X}}$is a matrix containing the time samples of x[n] according to the leakage model *C_{LP}*given above, *A̅* is a vector containing the coefficients a_{pkq} and *W̅* is a noise vector.

One may leverage the same estimator used by the predistortion model (MPAPD algorithm) applied as direct learning in order to obtain the Leakage Path Channel coefficients, which provide the coefficients for the leakage model: $\overline{A} = {\left({\overline{\overline{X}}}^{H}\overline{\overline{X}}\right)}^{- 1} ⋅ \left({\overline{\overline{X}}}^{H}\overline{{z}_{L}}\right) .$ In using the particular model, both pre-power amplifier leakage and post-power amplifier leakage is simultaneously considered, resulting with a high accuracy of the leakage model. Since the pre-power amplifier and the post-power amplifier paths contributing to the leakage exhibit different types of loopback distortion, considering both terms within the model results in a highly accurate determination of the pre-distortion model. For example, the dominant pre-power amplifier path (the leakage component originating from the signal upstream the power amplifier 218) would be non-linearly related, since its signals do not go through the power amplifier, therefore exhibiting a different AM/AM, AM/PM and memory effect characteristic. Conversely, the post-power amplifier path (leakage originating from downstream of the power amplifier 218) would exhibit non-linearity characteristics that correspond to the power amplifier non-linearity, however, with a certain time delay and a different frequency selective amplitude/phase response. In considering both, accurate results may be achieved.

In an application considering the leakage within a loopback calibration, the next step would be to configure the loopback path 250 to its loopback calibration settings, i.e. closing switches 252 and 254 as well as adjusting the adjustable attenuation 256 to the calibration setting. As previously indicated, Equation 1 would apply, reading in a matrix representation: $\overline{z} = \overline{Y} + \overline{\overline{X}} ⋅ \overline{A} + \overline{W} .$

In order to consider the previously-determined leakage, leakage cancelation may be digitally performed before the pre-distortion model is determined in the pre-distortion estimation circuit 240 according to the following formula: $\overline{z} - \overline{\overline{X}} ⋅ \overline{A} = \overline{Y} + \overline{W} .$

In other words, a derived calibration signal Y is determined using the further received calibration signal z and subtracting the leaked signal component of the calibration signal z_{LK} (equal to X*A) from the further received calibration signal before the pre-distortion model is determined. Since the loopback thermal signal-to-noise ratio is high, one may thus achieve an accurate leakage compensated observation of the samples of y(t) (by determining the derived calibration signal), which is desired for the successful application of a pre-distortion estimation, for example by means of the MPABD algorithm. Doing so may result in strongly-decreased leakage induced degradation of the Error Vector Magnitude of the signal downstream of the power amplifier 218 during normal operation. For example, if the AM/AM and AM/PM distortion illustrated in Figs. 7 and 8 was considered to be present without leakage cancelation, an error vector magnitude for the radio frequency signal after the power amplifier 218 of -36 dB may be observed.

As opposed to this, when considering the leakage model during the determination of the predistortion circuit, the error vector magnitude without leakage distortion may decrease to - 45dB. That is, the transmission path's error vector magnitude (EVM) due to only linearity would jump from -45 dB to -36 dB when not considering the leakage appropriately, which may be insufficient for many wireless (WIFI) modulation and coding schemes. In particular, if one considers that a transmitter may exhibit many additional impairments (the signal-to-noise ratio of the modem, DAC SINAD, IQ imbalance, IQ skew, phase noise, thermal noise, ...). Therefore, the EVM budget for non-linearity of the power amplifier 218 may be even lower than the overall target for the error vector magnitude. For example, for the 802.11ax modulation scheme MCS10/11 (1024 QAM), the target for the EVM is -43dB. Such a demanding target may only be achieved when considering the leakage model as described herein.

In summary, some examples implement a novel approach of estimating undesired leakage signals (by determining a leakage model) from both, pre-power amplifier paths and post-power amplifier paths. One particular way is to employ two radio frequency switches and a controllable radio frequency attenuator (which is set to isolation mode for the main loopback path) and then canceling digitally the leakage component during normal loopback operation. The same principle can be applied for a co-running receiver of either the same or another transmission standard. For the calibration, the properties of the leakage exhibited by the loopback algorithm are estimated by opening (isolation mode) the switches within the loopback path and setting the loopback input attenuator to maximum attenuation. Then, after the loopback leakage parameters are known (the leakage model is determined), the loopback components are set to their normal operating mode (closing the switches within the loopback path and setting the variable attenuation element to a value as determined by an automatic gain control algorithm) and the leakage component is canceled digitally during the determination of the pre-distortion model. This may provide that the calibration's observation represents the transmit/receive characteristics accurately without leakage induced distortion, thus possibly avoiding severe post-calibration TX/RX performance segregation.

As previously discussed, the same principle can be applied for a co-running receiver, where the leakage parameters are acquired (the leakage model is determined) when the RX (the receive path) is disconnected from its antenna or radiator by a TX/RX switch and the aggressor TX (transmission path) transmits a signal.

Other than alternative approaches, the examples described herein do not try to minimize leakage distortions by design, but rather estimate or calculate the leakage model and cancel or decrease leakage during other operation modes of wireless transmission circuits. Moreover, by estimating leakage signal components introduced by both pre-power amplifier paths and post-power amplifier paths, a wide range of sources for loopback distortions (AM/AM, AM/PM, memory effects, frequency responses) are considered. Some examples apply an advanced mathematical model (expanded discrete time memory polynomial) to estimate and calculate the leakage model and to cancel the leakage signal, thus facilitating highly accurate estimation and cancelation. As compared to alternative approaches trying to avoid leakage by design, which effort can complicate the radio frequency design and, require high resources and design and verification time, the improvements achieved by the methods and circuits described herein come at only minimum additional hardware requirements. In some examples, they can even be considered to be zero, since some transceivers may already contain digital calibration blocks (such as for the determination of a memory pre-distortion model, MPAPD) which may be reused for the determination of the leakage model (leakage parameter acquisition phase). As compared to an approach trying to avoid leakage by design, performance gains may be significantly increased since radio frequency simulations do not predict the silicon behavior very well with respect to leakage, considerable limiting the performance of such an approach.

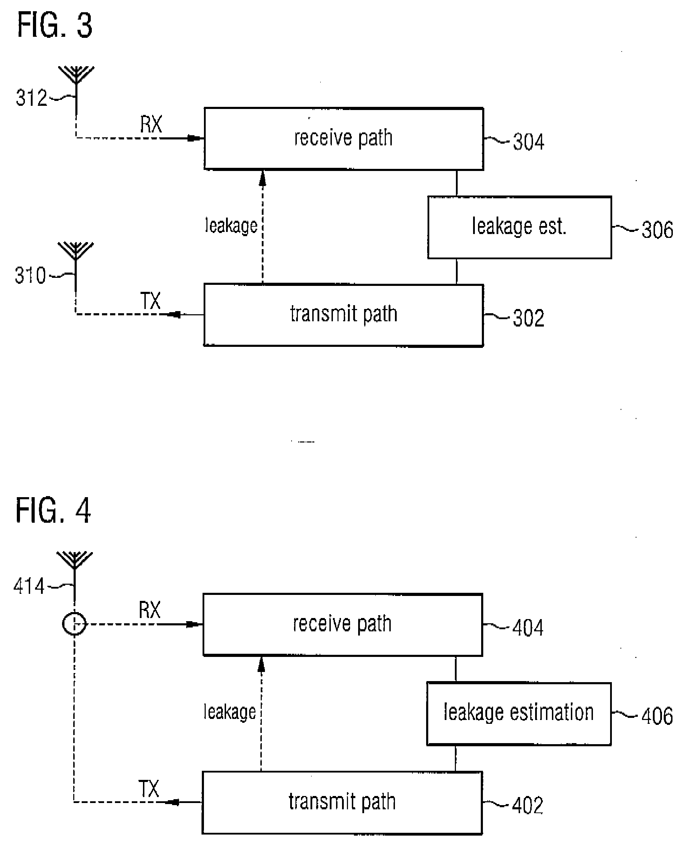

Figs. 3 and 4 schematically illustrate possible application scenarios, in particular an application for a co-running transceiver in Fig. 3 as well as for a full duplex transceiver in Fig. 4. In the co-running example illustrated in Fig. 3, the receive path 304 and the transmit path 302 are running in parallel, each using a different antenna or radiator. In the example in Fig. 3, the transmit path 302 uses a first radiator 310 while the receive path 304 uses a second radiator or antenna 312. The co-running application illustrated in Fig. 3 may use transmit paths and receive paths operating according to different standards, such as for example a transmitter transmitting according to one of the WLAN standards and a receiver receiving a Bluetooth signal or vice-versa. Further co-running scenarios include multiple input multiple output scenarios, where the transmit path 302 and the receive path 304 may belong to different transceivers while both transceivers operate according to the same standard, such as for example the WLAN standard or one of the mobile telecommunication standards as standardized by means of 3GGP.

A further example for a full duplex application, as for example according to the long-term evolution standard (LTE) is illustrated in Fig. 4. In this application, the transmit path 402 and the receive path 404 may simultaneously operate and use the same antenna or radiator 414 although eventually at slightly different center frequencies (separated by the duplex distance). Once the leakage model has been determined, it can be used on a transmit signal transmitted presently transmitted via the transmit path 402 to compensate the leakage component within a receive signal presently and simultaneously received via the receive path 404.

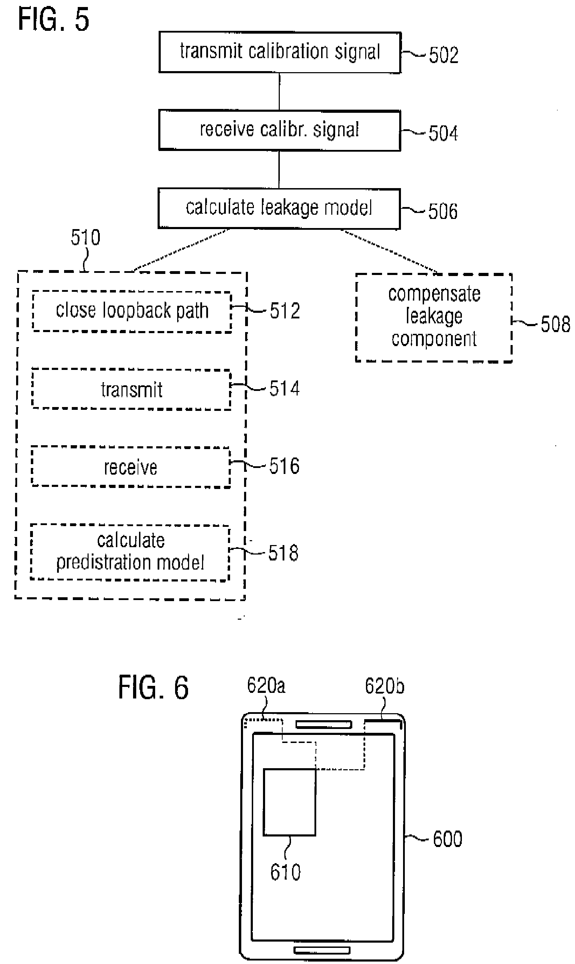

Fig. 5 schematically illustrates an example of a method for calculating leakage between a transmit path and a receive path. The method comprises transmitting a calibration signal via the transmit path 502 and receiving a received calibration signal via the receive path 504. The method further comprises calculating a leakage model 506 for a leakage between the transmit path and the receive path using the calibration signal and the received calibration signal.

According to some examples, the method further optionally comprises using the leakage model and a transmit signal presently transmitted via the transmit path to compensate a leakage component within a receive signal presently received via the receive path as illustrated by step 508 in Fig. 5.

Further examples may optionally comprise using the leakage model within a loopback calibration 510. According to some examples, the loopback calibration optionally comprises closing a loopback path 512 opened during the determination of the leakage model, transmitting 514 of a further calibration signal via the transmit path and receiving 516 a further received calibration signal via the receive path. The loopback calibration may further comprise calculating a pre-distortion model for the transmit path 518 using the further received calibration signal and the leakage model.

Fig. 6 schematically illustrates an example of a mobile telecommunications device 600 comprising a wireless communication circuit 610, as here illustrated and according to one of the examples described herein. According to the particular implementation and to whether it is a co-running implementation or a full or half duplex implementation, the wireless communication circuit within the mobile telecommunications device 610 may be coupled to one or to both of the antenna radiators 620a and 620b of the mobile telecommunications device 600.

While the examples have previously been described mainly for WLAN and Bluetooth applications, further examples of wireless communication circuits may be configured to operate according to another wireless transmission standard, e.g. according to one of the 3GPP-standardized mobile communication networks or systems. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc..

When using an example as described herein, a transmit path's performance (e.g. in terms of EVM spectral mask or band edge emission) would remain essentially constant, even if leakage was deliberately introduced into the system.

One could deliberately introduce leakage from a transmit path (TX) to a normal receive path (RX) or to a dedicated receive path for Loopback calibration (LPBK RX) by several methods, irrespective whether it is a single transmitter under test or whether it is different transceivers in a co- running scenario.

A first possibility is to connect a TX output to an input of the RX or the LPBK RX externally (outside of an IC) using passive devices only (cables, attenuators, filters, PCB traces, capacitors...). This would emulate Post-PA leakage, as we would be maintaining the PA nonlinearity characteristics in the deliberate leakage path.

A second possibility is to connect an output of active devices (e.g. an External PA) and cables to an input of the RX or the LPBK RX externally (outside the IC) using. Active devices would emulate Pre-PA leakage, as it would introduce different nonlinearity characteristics than those of the TX of the transceiver under investigation.

A third possibility is to us a combination of the first and second options (Active and Passive devices, e.g. PA and Filter), emulating both Pre-PA and Post-PA leakage.

A fourth possibility is to connect a TX output to an input of the RX or the LPBK RX internally (inside the IC) using, for example, a Focused Ion Beam (FIB). Further Implementation examples are adding inductive coupling, adding a deliberate "parasitic" capacitance between TX and RX or LPBK (RX), creating a resistive connection between TX and LPBK (RX) and so forth. The latter options can be applied as Pre-PA and/or Post-PA leakage, emulating either one or both impairment types.

Example 1 is a method for calculating a leakage between a transmit path and a receive path, comprising transmitting a first calibration signal via the transmit path; receiving a second calibration signal via the receive path; opening a loopback path between the transmit path and the receive path while transmitting a first calibration signal; calculating a leakage model for a leakage between the transmit path and the receive path using the first and second calibration signals; and compensating the leakage between the transmit path and the receive path using the leakage model during a loopback calibration of the transceiver.

In example 2, in the method of example 1, the leakage model comprises at least one of a contribution for a nonlinearity of an amplifier within the transmit path, a memory effect of the transmit path, and a channel between the transmit path and the receive path.

In example 3, in the method of any of the preceding examples, the leakage model c_{LP} of the leakage of the first calibration signal x[n] is based on the following equation: ${C}_{LP} \left[x\left(n\right)\right] = {\sum }_{p = 0}^{P} {\sum }_{k = 1}^{K} {\sum }_{q = 0}^{Q} {a}_{pkq} {\left|x\left(n-q-p\right)\right|}^{k - 1} x \left(n-q-p\right) ,$ wherein x[n] denotes the n-th sample of the first calibration signal and the parameters *α_{pkq}*are calculated using the first calibration signal and the second calibration signal *c_{LP}*(*x*[*n*])*.*

In example 4, in the method of example 3, the leakage model comprises the same contributions for a power amplifier within the transmit path as the model used for the loopback calibration.

In example 5, the method of any of the preceding examples further comprises increasing an adjustable attenuation within the loopback path to a possible maximum.

In example 6, in the method of any of the preceding examples, wherein the loopback calibration comprises: closing the loopback path; transmitting a third calibration signal via the transmit path; receiving a fourth calibration signal via the receive path; and calculating a predistortion model for the transmit path using the fourth calibration signal and the leakage model.

In example 7, in the method of example 6, the predistortion model is based on the following equation: $\hat{z} \left(n\right) = F \left[y\left(n\right)\right] = {\sum }_{q = 0}^{Q - 1} {\sum }_{k = 1}^{K} {a}_{kq} y \left(n-q\right) {\left|y\left(n-q\right)\right|}^{k - 1} ,$ wherein y[n] denotes the n-th sample of the third calibration signal and the parameters *α_{kq}*are calculated using the third calibration signal and a derived calibration signal z(n).

In example 8, in the method of example 7, the derived calibration signal *ẑ*(*n*) is determined correcting the fourth calibration signal *z̅*(n)by a leakage component *z̅*(*n*)*_{LK}* : $\hat{z} \left(n\right) = \overline{z} \left(n\right) - {\overline{z} \left(n\right)}_{LK} ,$ wherein $\overline{z} {\left(n\right)}_{LK} = {\sum }_{p = 0}^{P} {\sum }_{k = 1}^{K} {\sum }_{q = 0}^{Q} {α}_{pkq} {\left|y\left(n-q-p\right)\right|}^{k - 1} y \left(n-q-p\right) .$

In example 9, in the method of any of the preceding examples, the transmit path and the receive path are associated with a single transceiver.

In example 10, the method of any of the preceding examples further comprises: using the leakage model and a transmit signal presently transmitted via the transmit path to compensate a leakage component within a receive signal presently received via the receive path.

In example 11, the method of example 10 further comprises disconnecting a radiator from the transmit path while transmitting the first calibration signal.

Example 12 is a wireless communication circuit, comprising a transmit path; a receive path; a leakage estimation circuit configured to calculate a leakage model for a leakage between the transmit path and the receive path using a first calibration signal transmitted via the transmit path and a second calibration signal received via the receive path.

In example 13, the wireless communication circuit of example 12 further comprises a loopback path between the transmit path and the receive path, the loopback path comprising at least one switch and at least one attenuation element.

In example 14, in the wireless communication circuit of example 13, the attenuation element in the loopback path is adjustable.

In example 15, in the wireless communication circuit of example 13 or 14, the loopback path comprises a first switch between the transmit path and the attenuation element; and a second switch between the attenuation element and the receive path.

In example 16, the wireless communication circuit of any of examples 13 to 15 further comprises: a power amplifier in the transmit path, the loopback path being coupled to the transmit path downstream of the power amplifier.

In example 17, the wireless communication circuit of example 16 further comprises a predistortion estimation circuit configured to calculate a predistortion model for the power amplifier using a third calibration signal transmitted via the transmit path when the switch of the loopback path is closed, the predistortion estimation circuit using the third calibration signal, a fourth calibration signal and the leakage model.

In example 18, the wireless communication circuit of example 17 further comprises a predistortion circuit in the transmit path and upstream of the power amplifier, the predistortion circuit being configured to modify a transmit signal using the predistortion model.

In example 19, in the wireless communication circuit of any of examples 13 to 18, the transmit path and the receive path are associated with the same transceiver.

In example 20, in the wireless communication circuit of any of examples 12 to 18, the transmit path is part of a first transceiver and wherein the receive path is part of a second transceiver.

In example 21, in the wireless communication circuit of example 20, the first transceiver is configured to operate according to a first wireless transmission standard and wherein the second transceiver is configured to operate according to a second wireless transmission standard.

Example 22 is transceiver for a wireless communication signal, the transceiver comprising a wireless communication circuit of any of examples 12 to 21.

In example 23, the transceiver of example 22 further comprises a switching element between the transmitter and an antenna port for coupling the transmitter to a radiator.

Example 24 is a mobile telecommunications device, comprising a wireless communication circuit according to any of examples 12 to 21.

In example 25, the mobile telecommunications device of example 24, further comprises a radiator configured to couple to the transmit path and to the receive path.

In example 26, the mobile telecommunications device of example 24, further comprises a first radiator configured to couple to the transmit path; and a second radiator configured to couple to the receive path.

The aspects and features mentioned and described together with one or more of the previously detailed examples and figures, may as well be combined with one or more of the other examples in order to replace a like feature of the other example or in order to additionally introduce the feature to the other example.

Examples may further be a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. It will thus be appreciated that those skilled in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other example examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A method for calculating a leakage between a transmit path and a receive path, comprising:
transmitting a first calibration signal via the transmit path;
receiving a second calibration signal via the receive path;
opening a loopback path between the transmit path and the receive path while transmitting a first calibration signal;
calculating a leakage model for a leakage between the transmit path and the receive path using the first and second calibration signals; and
compensating the leakage between the transmit path and the receive path using the leakage model during a loopback calibration of the transceiver.

2. The method of claim 1, wherein the leakage model comprises at least one of a contribution for a nonlinearity of an amplifier within the transmit path, a memory effect of the transmit path, and a channel between the transmit path and the receive path.

3. The method of any of the preceding claims, wherein the leakage model c_{LP} of the leakage of the first calibration signal x[n] is based on the following equation: ${C}_{LP} \left[x\left(n\right)\right] = {\sum }_{p = 0}^{P} {\sum }_{k = 1}^{K} {\sum }_{q = 0}^{Q} {a}_{pkq} {\left|x\left(n-q-p\right)\right|}^{k - 1} x \left(n-q-p\right) ,$
wherein
x[n] denotes the n-th sample of the first calibration signal and the parameters *α_{pkq}* are calculated using the first calibration signal and the second calibration signal *c_{LP}*(*x*[*n*])*.*

4. The method of claim 3, wherein the leakage model comprises the same contributions for a power amplifier within the transmit path as the model used for the loopback calibration.

5. The method of any of the preceding claims, further comprising:
increasing an adjustable attenuation within the loopback path to a possible maximum.

6. The method of any of the preceding claims, wherein the loopback calibration comprises:
closing the loopback path;
transmitting a third calibration signal via the transmit path;
receiving a fourth calibration signal via the receive path; and
calculating a predistortion model for the transmit path using the fourth calibration signal and
the leakage model.

7. The method of claim 6, wherein the predistortion model is based on the following equation: $\hat{z} \left(n\right) = F \left[y\left(n\right)\right] = {\sum }_{q = 0}^{Q - 1} {\sum }_{k = 1}^{K} {a}_{kq} y \left(n-q\right) {\left|y\left(n-q\right)\right|}^{k - 1} ,$ wherein y[n] denotes the n-th sample of the third calibration signal and the parameters *α_{kq}*are calculated using the third calibration signal and a derived calibration signal *ẑ*(*n*).

8. The method of claim 7, wherein the derived calibration signal *ẑ*(*n*) is determined correcting the fourth calibration signal *z̅*(*n*)by a leakage component *z̅*(*n*)*_{LK}* : $\hat{z} \left(n\right) = \overline{z} \left(n\right) - {\overline{z} \left(n\right)}_{LK} ,$ wherein $\overline{z} {\left(n\right)}_{LK} = {\sum }_{p = 0}^{P} {\sum }_{k = 1}^{K} {\sum }_{q = 0}^{Q} {α}_{pkq} {\left|y\left(n-q-p\right)\right|}^{k - 1} y \left(n-q-p\right) .$

9. The method of any of the preceding claims, wherein the transmit path and the receive path are associated with a single transceiver.

10. The method of any of the preceding claims, further comprising:
using the leakage model and a transmit signal presently transmitted via the transmit path to compensate a leakage component within a receive signal presently received via the receive path.

11. The method of claim 10, further comprising:
disconnecting a radiator from the transmit path while transmitting the first calibration signal.

12. Wireless communication circuit, comprising:
a transmit path;
a receive path;
a leakage estimation circuit configured to calculate a leakage model for a leakage between the transmit path and the receive path using a first calibration signal transmitted via the transmit path and a second calibration signal received via the receive path.

13. The wireless communication circuit of claim 12, further comprising:
a loopback path between the transmit path and the receive path, the loopback path comprising at least one switch and at least one attenuation element.

14. The wireless communication circuit of claim 13, further comprising:
a power amplifier in the transmit path, the loopback path being coupled to the transmit path downstream of the power amplifier.

15. The wireless communication circuit of claim 13 or 14, further comprising:
a predistortion estimation circuit configured to calculate a predistortion model for the power amplifier using a third calibration signal transmitted via the transmit path when the switch of the loopback path is closed, the predistortion estimation circuit using the third calibration signal, a fourth calibration signal and the leakage model.
